# EUROPÄISCHE PATENTSCHRIFT

(11) **EP 1 899 689 B1**
(45) Veröffentlichungstag und Bekanntmachung des Hinweises auf die Patenterteilung: **17.09.2014**
(21) Anmeldenummer: 06763158.0
(22) Anmeldetag: 16.05.2006
(51) Int. Cl.: G01F 23/26, G01F 25/00

(54) **VORRICHTUNG ZUR KAPAZITIVEN BESTIMMUNG UND/ODER ÜBERWACHUNG DES FÜLLSTANDES**
DEVICE FOR THE CAPACITIVE DETERMINATION AND/OR MONITORING OF A FILL-LEVEL
DISPOSITIF POUR DETERMINER LA QUANTITE ET/OU SURVEILLER LE NIVEAU D'UNE SUBSTANCE

(30) Priorität: 07.07.2005 DE 102005032131
(43) Veröffentlichungstag der Anmeldung: 19.03.2008
(73) Patentinhaber: Endress+Hauser GmbH+Co. KG, 79689 Maulburg (DE)
(72) Erfinder: WERNET, Armin, 79618 Rheinfelden (DE); DIETERLE, Roland, 79588 Efringen-Kirchen (DE); UPPENKAMP, Kaj, 79664 Wehr (DE)
(74) Vertreter: Andres, Angelika Maria
(86) Internationale Anmeldenummer: PCT/EP2006/062339
(87) Internationale Veröffentlichungsnummer: WO 2007/006599

(56) Entgegenhaltungen:
- DE-A1- 10 231 946
- US-A- 3 956 760
- US-A- 4 412 450
- US-A- 4 676 101

## Beschreibung

Die Erfindung bezieht sich auf eine Vorrichtung zur kapazitiven Bestimmung und/ oder Überwachung des Füllstandes eines Mediums in einem Behälter, mit mindestens einer Sondeneinheit, welche elektrisch gegenüber dem Medium isoliert ist, und mit mindestens einer Elektronikeinheit, welche die Sondeneinheit mit mindestens einem elektrischen Ansteuersignal beaufschlagt, welche von der Sondeneinheit ein elektrisches Messsignal empfängt, und welche das Messsignal in Hinsicht auf den Füllstand auswertet, wobei das Ansteuersignal ein elektrisches Wechselspannungssignal ist.

Bei der kapazitiven Füllstandsmessung bzw. -überwachung bilden eine Sondeneinheit (beispielsweise ein Sondenstab oder ein Sondenseil) und die Wandung des Behälters, in welchem sich das Medium befindet, oder eine zweite Sondeneinheit die beiden Elektroden eines Kondensators. Das Medium dient dabei als Dielektrikum. Da sich in Abhängigkeit von der Füllstandshöhe die Kapazität dieses Kondensators ändert, kann aus der Kapazität auf den Füllstand geschlossen werden. Für die Messung der Kapazität wird dabei die Sondeneinheit mit einem Ansteuersignal beaufschlagt. Dabei handelt es sich zumeist um eine elektrische Wechselspannung einer vorgebbaren Frequenz. Von dem "Messkondensator" wird dann ein Messsignal abgegriffen. Das Messsignal, bei welchem es sich üblicherweise um ein elektrisches Stromsignal handelt, wird zumeist für die Weiterverarbeitung beispielsweise durch ein Widerstandselement in ein Spannungssignal übertragen. Aus diesem wird dann die Kapazität und damit der Füllstand bestimmt bzw. überwacht.

Da ein leitfähiges Medium zu einem Kurzschluss oder zumindest zu einer Verfälschung der Messwerte führen kann, werden in der Praxis vollständig isolierte Sonden eingesetzt. Dabei findet beispielsweise eine Kunststoffisolierung (PP, PTFE, PFA) Verwendung. Bei leitfähigen Medien wird dadurch eine von der Dielektrizitätskonstanten unabhängige Messung erreicht, in welcher nur noch die vom Medium bedeckte Isolationskapazität relevant ist.

In der Anwendung kommt es vor, dass beispielsweise bei der Messung von erhitztem Wasser Diffusion des Mediums durch die Sondenisolierung auftritt und dass sich dadurch im Prozessanschluss ohmisch leitende Übergangswiderstände bilden. Bei der Diffusion kann beispielsweise durch das Medium besonders im Bereich des - meist geerdeten - Gehäuses eine elektrische Verbindung mit der Behälterwandung oder Erde stattfinden. Ein weitere Möglichkeit besteht darin, dass durch eine Beschädigung der Isolation das Medium zur Sondeneinheit vordringen kann und sich dadurch ebenfalls ein ohmisch leitfähiger Widerstand parallel zur Messkapazität bildet. Dieser Effekt des zusätzlichen Widerstands führt zu einer Verfälschung des Messwertes bis zum totalen Ausfall des Messgerätes.

Die Aufgabe der Erfindung besteht somit darin, ein kapazitives Messgerät mit einer isolierten Sondeneinheit vorzuschlagen, bei welchem ein Durchdringen des Mediums durch die Isolation zuverlässig erkannt wird.

Die Erfindung löst die Aufgabe dadurch, dass die Elektronikeinheit derartig ausgestaltet ist, dass sie die Sondeneinheit in einer Messphase mit dem Ansteuersignal beaufschlagt, dass sie die Sondeneinheit in einer Testphase mit einem Testsignal beaufschlagt, und dass sie in der Testphase von der Sondeneinheit ein Testmesssignal empfängt, wobei das Testsignal derartig ausgestaltet ist, dass es wenigstens einen Abschnitt mit einem im Wesentlichen konstanten Spannungswert aufweist. Die Erfindung besteht somit darin, dass die Sondeneinheit mit zwei unterschiedlichen Signalen angesteuert wird. In dem einen Fall handelt es sich um das Ansteuersignal während der Messphase. Bei diesem Signal handelt es sich um eine elektrische Wechselspannung, wie sie auch im Stand der Technik für die Messung des Füllstandes verwendet wird. Das zweite Signal, das Testsignal, wird während der Testphase auf die Sondeneinheit gegeben. Bei diesem Signal handelt es sich um ein Gleichspannungssignal. Aus dem sich daraus ergebenden Testmesssignal kann dann gefolgert werden, ob die Isolation noch vollständig gegeben oder ob das Medium hindurch getreten ist. Für den erfolgreichen Test - d.h. für die Erkennung, dass die Isolation überwunden worden ist - sollte eine Bedeckung der Sondeneinheit mit dem Medium gegeben sein, d.h. es sollte der Zustand gegeben sein, bei welchem die beschädigte oder durch Diffusion überwundene Isolationsschicht den Messwert beeinträchtigt. Somit lassen sich mit der Erfindung zuverlässig Beschädigungen der Isolation bzw. Diffusion durch die Isolation hindurch erkennen, die zu einer Messwertverfälschung führen können. Somit ist auch eine Früherkennung (predictive maintenance) einer nur leicht beschädigten Sonde möglich. Dies erhöht die Funktionssicherheit des Messgerätes erheblich.

Die Kapazitätsbestimmung bei einem kapazitiven Messgerät erfolgt im Allgemeinen mit einer kontinuierlich angelegten Wechselspannung, indem der durch den Messkondensator - gebildet aus der Sondeneinheit, der Wandung des Behälters und dem Medium - fließende Wechselstrom gemessen wird. In der Erfindung wird die kontinuierliche Wechselstrommessung vorzugsweise regelmäßig durch die Testphasen unterbrochen. In der dabei entstehenden Pausenzeit wird ein Gleichspannungspegel an die Sonde angelegt. Das Gleichspannungssignal wird z.B. durch einen Ausgangsport eines Prozessors oder einen sonstigen elektronischen Schalter über einen Widerstand - vorzugsweise hochohmig, z.B. 200 kOhm - oder beispielsweise durch einen gegen Masse geschalteten Spannungsteiler an die Messsonde angelegt. Vorzugsweise - falls die Elektronikeinheit insbesondere über einen Mikroprozessor verfügt - wird über einen Analog-/Digitalwandler das sich durch das Testsignal als Gleichspannung an der Sondeneinheit ergebende Testmesssignal in die Elektronikeinheit zurückgelesen, um dort ausgewertet zu werden. Ist die Sondeneinheit nicht beschädigt, so ergibt sich ein bekannter Gleichspannungswert, der von der Ausgestaltung des Testsignals abhängig ist. Ist die Sonde bzw. die die Sondeneinheit umgebende Isolation beschädigt, so sinkt der rückzulesende Gleichspannungswert je nach Art der Beschädigung und Leitfähigkeit des Mediums in Richtung 0 V ab. Durch das "Hin- und Herschalten" zwischen Wechselstrom- (d.h. Ansteuersignal) und Gleichstromsignal (d.h. Testsignal) wird die Genauigkeit der Kapazitätsmessung nicht verringert, es werden aber Isolationsdefekte, die in einem Bereich bis zu 100 kOhm liegen, sicher detektiert.

Eine Ausgestaltung beinhaltet, dass es sich bei dem Testsignal im Wesentlichen um ein elektrisches Gleichspannungssignal handelt. Die Testphase sollte, um die Messungen nicht zu stören und um auch nicht zuviel Energie zu benötigen, möglichst kurz sein. Da es erforderlich ist, dass das Testsignal über wenigstens einen Zeitraum einen im Wesentlichen konstanten Spannungspegel aufweist, ist damit verbunden, dass es sich bei dem Testsignal gänzlich um ein Gleichspannungssignal handelt.

Eine Ausgestaltung der Erfindung sieht vor, dass die Elektronikeinheit einen sich aus dem Testmesssignal ergebenden Spannungswert mit einem von dem Testsignal abhängigen Spannungssollwert vergleicht. Ist durch das Medium keine elektrische Verbindung hergestellt, so liegt das Testsignal im Wesentlichen nur an der Kapazität der Sondeneinheit (d.h. innerer Leiter plus Isolationsschicht) an. Daher lässt sich ein bestimmter Spannungswert abgreifen. Dieser Wert ist jedoch vom Testsignal und den anderen vorhandenen Bauteilen abhängig. Ergibt sich dieser Wert, so ist die Isolation in Ordnung bzw. es ist kein Medium - zumindest unterhalb einer Menge, welche sich negativ auswirkt - eindiffundiert. Durch das Medium in der Sondeneinheit bzw. im Gehäuse, in welchem sich die Elektronikeinheit befindet, kommt es zu einer elektrischen Verbindung, über welche die Spannung des Testsignals abfällt. Damit geht einher, dass der "auslesbare" Spannungswert unterhalb des zu erwartenden Wertes liegt. Für eine entsprechende Alarmierung oder Signalisierung lassen sich unterschiedliche Toleranzbereiche vorgeben. Unterschreitet der Spannungswert einen ersten Toleranzbereich, d.h. ist der durch das eingedrungene Medium sich ergebende Widerstand innerhalb eines ggf. noch tolerierbaren Bereichs, so lässt sich eine Warnung erzeugen, welche sich beispielsweise dahingehend interpretieren lässt, dass Haarrisse vorliegen. Sinkt der Spannungswert weiter ab, so wird eine deutliche Alarmmeldung ausgegeben, weil zuviel Medium eingedrungen ist. Diese Grenzen sind jedoch beliebig an die spezifische Messsituation anzupassen.

Eine Ausgestaltung der Erfindung beinhaltet, dass die Elektronikeinheit in dem Fall, dass sich der sich aus dem Testmesssignal ergebende Spannungswert von dem vom Testsignal abhängigen Spannungssollwert über einen vorgebbaren Toleranzbereich hinaus unterscheidet, eine Fehlermeldung erzeugt. Der aus dem Testmesssignal bestimmbare Spannungswert ändert sich dann, wenn die Isolation nicht mehr vollständig ist oder wenn durch Diffusion Medium durch die Isolation hindurch gedrungen ist. Entspricht der Spannungswert dem Sollwert, so ist es nicht durch das Medium zu einer zusätzlichen elektrischen Verbindung gekommen. Unterscheidet sich jedoch der Spannungswert vom Sollwert, so ist Medium eingedrungen und es besteht entweder direkter Handlungsbedarf oder es sollte zumindest eine baldige Handlung angedacht werden.

Eine Ausgestaltung der Erfindung sieht vor, dass das Testsignal derartig ausg estaltet ist, dass zumindest für einen vorgebbaren Testzeitraum ein im Wesentlichen konstanter Spannungswert an der Sondeneinheit anliegt. In Abhängigkeit von den verwendeten Bauteilen ist es möglich, dass sich nicht sofort eine konstante Spannung an der Sondeneinheit ergibt. Daher ist es erforderlich, wenigstens für die Zeit, welche die Bauteile oder die Kombination der Bauteile benötigen, eine konstante Spannung anzulegen. Diese Zeitdauer lässt sich beispielsweise aus Probemessungen an dem Messgerät bestimmen.

Eine Ausgestaltung der Erfindung beinhaltet, dass in der Elektronikeinheit zumindest ein Mikroprozessor vorgesehen ist. Ein Mikroprozessor vereinfacht die Bedienung des Messgerätes und bietet auch die Möglichkeit, die gemessenen Signal direkt zu digitalisieren. Weiterhin lassen sich unterschiedliche Mess- oder auch Testprozeduren leichter implementieren.

Die Erfindung wird anhand der nachfolgenden Zeichnungen näher erläutert. Es zeigt:
Fig. 1: eine schematische Darstellung der erfindungsgemäßen Messvorrichtung,
Fig. 2: eine schematische Darstellung der Signale, mit welcher die Sondeneinheit erfindungsgemäß beaufschlagt wird, und
Fig. 3: eine schematische Ersatzschaltung des erfindungsgemäßen Messgerätes.

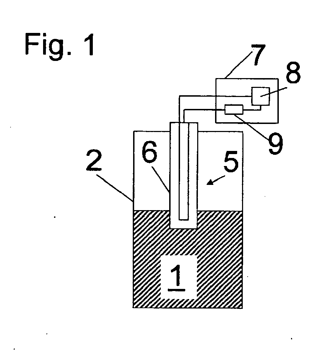

Fig. 1 zeigt schematisch die Anwendung eines erfindungsgemäßen Messgerätes bei der Bestimmung und/oder Überwachung des Füllstandes des Mediums 1 in einem Behälter 2. Bei dem Medium 1 handelt es sich um eine Flüssigkeit, es kann sich jedoch auch um ein Schüttgut handeln. Die Sondeneinheit 5 - hierbei handelt es sich beispielsweise um einen sog. Sondenstab oder ein Sondenseil - und die Wandung des Behälters 2 bilden mit dem Medium 1 einen Messkondensator. Dessen Kapazität ist abhängig vom Füllstand des Mediums 1, weshalb aus dem gemessenen Kapazitätswert auf den Füllstand rückgeschlossen werden kann. Für die Messung der Kapazität wird die Sondeneinheit 5 von der Elektronikeinheit 7 mit einem Ansteuersignal As beaufschlagt. Dabei handelt es sich üblicherweise um ein elektrisches Wechselspannungssignal einer vorgebbaren Frequenz. Das an der Sondeneinheit 5 als Messsignal gemessene Wechselstromsignal wird dann üblicherweise über einen - hier nicht dargestellten - Widerstand in ein Spannungssignal umgewandelt und dann entsprechend ausgewertet. Die Elektronikeinheit 7 beaufschlagt also die Sondeneinheit 5 mit einem Ansteuersignal AS, empfängt das Messsignal und bestimmt daraus den Füllstand bzw. überwacht diesen damit. Handelt es sich um ein elektrisch leitfähiges Medium 1, so ist die eigentliche Sondeneinheit mit einer Isolationsschicht 6 umgeben. Wird durch Alterung oder durch starke Beanspruchung die Isolationsschicht 6 undicht oder diffundiert das Medium 1 durch die Isolationssicht 6 hindurch, so bilden sich im Messgerät elektrische Verbindungen, welche das Messsignal verfälschen oder sogar zum Ausfall des Messgerätes führen können. Um dies zu überwachen, ist das Messgerät gemäß der Erfindung ausgerüstet.

In der Elektronikeinheit 7 befindet sich ein Mikroprozessor 8 zur Steuerung und Messung. Dieser Mikroprozessor 8 beaufschlagt in der Messphase die Sondeneinheit 5 mit dem Ansteuersignal AS und empfängt das Messsignal. In einer Testphase wird die Sondeneinheit 5 mit dem Testsignal TS beaufschlagt und das Testmesssignal wird empfangen. Vorzugsweise findet die Testphase dann statt, wenn das Medium 1 die Sondeneinheit 5 bedeckt, weil sich somit bei einer Beschädigung der Isolation 6 die größten Messeffekte einstellen. Handelt es sich bei dem Ansteuersignal AS um eine elektrische Wechselspannung, so handelt es sich bei dem Testsignal TS erfindungsgemäß um eine elektrische Gleichspannung. Das Testsignal TS muss dabei so ausgestaltet sein, dass es wenigstens über eine einstellbare Zeit auf einem konstanten Spannungswert verweilt. Ändert sich also beim Ansteuersignal AS die anliegenden Spannung, so ist sie beim Testsignal TS zumindest während einer vorgebbaren Zeitdauer konstant. Die Zeitdauer hängt insbesondere von der Ausgestaltung der beteiligen Bauteile ab. Das Testsignal TS erlaubt die Auslesung des Testmesssignals. Im gezeigten Fall wird dafür das Testmesssignal über einen Analog-/Digitalwandler 9 digitalisiert, um somit vom Mikroprozessor 8 auswertbar zu sein. Aus diesem digitalisierten Testmesssignal wird ein Spannungswert bestimmt, welcher mit einem vom Testsignal TS abhängigen Spannungssollwert verglichen wird. Ist die Isolation 6 nicht mehr vollständig oder ist aus einem anderen Grund das Medium 1 eingedrungen, so wird der Spannungswert des Testmesssignals gegen Null gehen bzw. sich auf jeden Fall von dem Spannungssollwert unterscheiden. Daher kann dann von der Elektro-nikeinheit 7 ein Alarmsignal ausgegeben werden. Der Mikroprozessor 8 ist für die Ausführung der Erfindung nicht wesentlich; er ermöglicht jedoch eine einfachere und vor allem leichter zu ändernde Ausgestaltung des Messgerätes. Es ist ein Schalter zum Schalten zwischen Ansteuer- und Testsignal vorteilhaft. Weiterhin ist der Analog-/Digitalwandler 9 nur eine mögliche Ausgestaltung für den Vergleich der sich aus dem Testmesssignal ergebenden Spannung mit dem Sollspannungswert. Alternativ kann dies über die Verwendung eines Operationsverstärkers als Vergleicher geschehen.

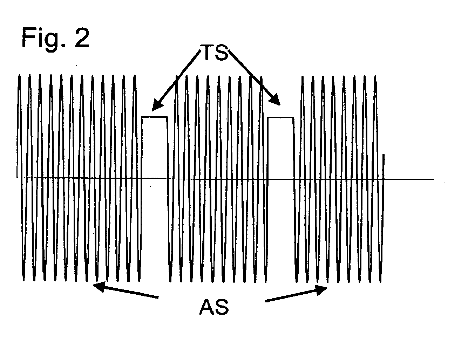

In der Fig. 2 ist schematisch die Signalabfolge dargestellt, wie sie erfindungsgemäß an der Sondeneinheit 5 der erfindungsgemäßen Messvorrichtung anliegt. Das Spannungssignal alterniert zwischen der Wechselspannung des Ansteuersignals AS und der Gleichspannung des Testsignals TS. Die Testphase kann regelmäßig, mit einer beliebig vorgebbaren Regelmäßigkeit eingefügt werden. Ist die Wahrscheinlichkeit für eine Beeinträchtigung der Isolationsschicht 6 oder der Diffusion des Mediums 1 durch diese hindurch geringer, so kann der Test auch seltener durchgeführt werden. Es ist jedoch möglich, die Testphase sehr kurz zu halten, da das Auslesen eines Spannungswerts bereits ausreichend sein kann. Somit wird die allgemeine Messung nicht beeinflusst. Vorteilhaft ist somit die Ausgestaltung, dass sich nach jeder Messphase eine Testphase anschließt.

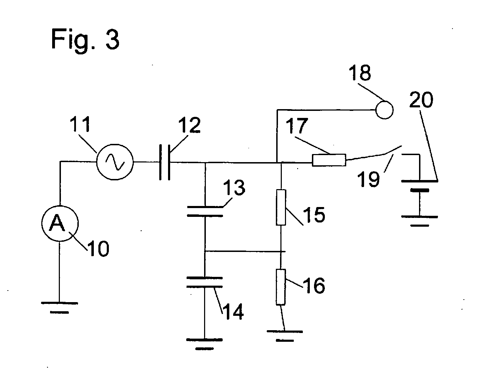

In der Fig. 3 ist ein Ersatzschaltbild dargestellt für die Messanordnung. Der linke Abschnitt beschreibt die Messphase, der rechte Abschnitt die Testphase. Die Wechselspannungsquelle 11 ist über einen Koppelkondensator 12, welcher den Gleichspannungsanteil aus dem Ansteuersignal herausfiltert, mit der Sondeneinheit verbunden. Die Sondeneinheit ist hier durch zwei Kondensatoren repräsentiert: Dabei handelt es sich um die Kapazität, die sich in Verbindung mit dem Medium ergibt, 14, und die Kapazität, die sich aus der Isolationsschicht ergibt 13. Aus der Strommessung über das entsprechende Messgerät 10 lässt sich die Gesamtkapazität der Sondeneinheit und daraus der Füllstand bestimmen. Auf der rechten Seite ist der Fall dargestellt, dass durch eine Beschädigung der Isolation leitfähiges Material in das Messgerät eingedrungen ist. Dies für zu einer leitfähigen Verbindung bzw. umgekehrt zu einem elektrischen Widerstand 15. Dieser stellt mit dem Medium eine leitfähige Verbindung her und verbindet somit das Messgerät auch mit dem Mediumswiderstand 16. In der Testphase wird über einen Schalter 19 ein Gleichspannungssignal von der entsprechenden Gleichspannungsquelle 20 über einen Widerstand 17 auf die Sondeneinheit gegeben. Der Schalter 19 lässt sich beispielsweise dadurch realisieren, dass ein Ausgang/Port eines Mikroprozessors entsprechend geschaltet wird. Würde nun der Fall vorliegen, dass die Isolation vollständig geschlossen wäre, so würde das Gleichspannungssignal nur an den Kapazitäten 13, 14 anliegen. Daher würde sich auch ein von der Ausgestaltung des Testsignals abhängiger Spannungswert beim Analog-/Digitalwandler 20 ergeben. Im gezeigten Fall fällt jedoch die Spannung an den beiden Widerständen 15, 16 ab, d.h. der Spannungswert, welcher sich einstellt, ist kleiner als der zu erwartende Wert. Somit ist es möglich, aus der Überwachung des Spannungswert auf die Verfassung der Isolationsschicht zu schließen.

### Bezugszeichenliste

**Tabelle 1**

| | |
|---|---|
| 1 | Medium |
| 2 | Behälter |
| 5 | Sondeneinheit |
| 6 | Isolation |
| 7 | Elektronikeinheit |
| 8 | Mikroprozessor |
| 9 | Analog-/Digitalwandler |
| 10 | Strommessgerät |
| 11 | Wechselspannungsgenerator |
| 12 | Koppelkondensator |
| 13 | Isolations-Kapazität |
| 14 | Mediums-Kapazität |
| 15 | Isolationsbruch-Widerstand |
| 16 | Mediums-Widerstand |
| 17 | Widerstand |
| 18 | Analog-/Digitalwandler |
| 19 | Schalter |
| 20 | Gleichspannungsquelle |

## Patentansprüche

1. Vorrichtung zur kapazitiven Bestimmung und/oder Überwachung des Füllstandes eines Mediums (1) in einem Behälter (2), mit mindestens einer Sondeneinheit (5), welche elektrisch gegenüber dem Medium (1) isoliert ist, und mit mindestens einer Elektronikeinheit (7), welche die Sondeneinheit (5) mit mindestens einem elektrischen Ansteuersignal (AS) beaufschlagt, welche von der Sondeneinheit (5) ein elektrisches Messsignal empfängt, und welche das Messsignal in Hinsicht auf den Füllstand auswertet, wobei das Ansteuersignal (AS) ein elektrisches Wechselspannungssignal ist, **dadurch gekennzeichnet, dass** die Elektronikeinheit (7) derartig ausgestaltet ist, dass sie die Sondeneinheit (5) in einer Messphase mit dem Ansteuersignal (AS) beaufschlagt, dass sie die Sondeneinheit (5) in einer Testphase mit einem Testsignal (TS) beaufschlagt, und dass sie in der Testphase von der Sondeneinheit (5) ein Testmesssignal empfängt, wobei das Testsignal (TS) derartig ausgestaltet ist, dass es wenigstens einen Abschnitt mit einem im Wesentlichen konstanten Spannungswert aufweist.

2. Vorrichtung nach Anspruch 1, **dadurch gekennzeichnet,dass** es sich bei dem Testsignal (TS) im Wesentlichen um ein elektrisches Gleichspannungssignal handelt.

3. Vorrichtung nach Anspruch 1, **dadurch gekennzeichnet, dass** die Elektronikeinheit (7) einen sich aus dem Testmesssignal ergebenden Spannungswert mit einem von dem Testsignal (TS) abhängigen Spannungssollwert vergleicht.

4. Vorrichtung nach Anspruch 3, **dadurch gekennzeichnet, dass** die Elektronikeinheit (7) in dem Fall, dass sich der sich aus dem Testmesssignal ergebende Spannungswert von dem vom Testsignal (TS) abhängigen Spannungssollwert über einen vorgebbaren Toleranzbereich hinaus unterscheidet, eine Fehlermeldung erzeugt.

5. Vorrichtung nach Anspruch 1, **dadurch gekennzeichnet, dass** das Testsignal (TS) derartig ausgestaltet ist, dass zumindest für einen vorgebbaren Testzeitraum ein im Wesentlichen konstanter Spannungswert an der Sondeneinheit (5) anliegt.

6. Vorrichtung nach Anspruch 1, **dadurch gekennzeichnet, dass** in der Elektronikeinheit (7) zumindest ein Mikroprozessor (8) vorgesehen ist.

## Claims

1. Device for the capacitance determination and/or monitoring of the level of a medium (1) in a vessel (2), with at least one probe unit (5) which is electrically isolated in relation to the medium (1), and with at least one electronics unit (7) which exposes the probe unit (5) to at least one electronic control signal (AS), said electronics unit receiving an electrical measuring signal from the probe unit (5), and evaluating the measuring signal with regard to the level, wherein the control signal (AS) is an electrical alternating voltage signal, **characterized in that** the electronics unit (7) is designed in such a way that it exposes the probe unit (5) to the control signal (AS) in a measuring phase, **in that** it exposes the probe unit (5) to a test signal (TS) in a test phase and **in that** it receives a test measuring signal from the probe unit (5) in the test phase, wherein the test signal (TS) is designed in such a way that it has at least one section with an essentially constant voltage value.

2. Device as claimed in Claim 1, **characterized in that** the test signal (TS) is essentially an electrical direct voltage signal.

3. Device as claimed in Claim 1, **characterized in that** the electronics unit (7) compares a voltage value resulting from the test measuring signal against a voltage target value that depends on the test signal (TS).

4. Device as claimed in Claim 3, **characterized in that** the electronics unit (7) generates an error message if the voltage value resulting from the test measuring signal differs from the voltage target value that depends on the test signal (TS) in a way that goes beyond a pre-definable tolerance range.

5. Device as claimed in Claim 1, **characterized in that** the test signal (TS) is designed in such a way that an essentially constant voltage value is present at the probe unit (5) at least for a pre-definable testing period.

6. Device as claimed in Claim 1, **characterized in that** at least a microprocessor (8) is provided in the electronics unit (7).

## Revendications

1. Dispositif destiné à la détermination capacitive et/ou à la surveillance du niveau d'un produit (1) dans un réservoir (2), avec au moins une unité de sonde (5), laquelle est isolée électriquement par rapport au produit (1), et avec au moins une unité électronique (7), laquelle unité électronique alimente l'unité de sonde (5) avec au moins un signal de commande électrique (AS), laquelle unité électronique reçoit un signal de mesure électrique de l'unité de sonde (5), et laquelle unité électronique analyse le signal de mesure par rapport à l'état de remplissage, le signal de commande (AS) étant un signal de tension électrique de tension alternative, **caractérisé en ce que** l'unité électronique (7) est conçue de telle manière qu'elle alimente l'unité de sonde (5) dans une phase de mesure avec le signal de commande (AS), **en ce qu'**elle alimente l'unité de sonde (5) dans une phase de test avec un signal de test (TS), et **en ce qu'**elle reçoit de l'unité de sonde (5), dans la phase de test, un signal de mesure de test, le signal de test (TS) étant conçu de telle manière à présenter au moins une section avec une valeur de tension pour l'essentiel constante.

2. Dispositif selon la revendication 1, **caractérisé en ce que** concernant le signal de test (TS), il s'agit pour l'essentiel d'un signal électrique de tension continue.

3. Dispositif selon la revendication 1, **caractérisé en ce que** l'unité électronique (7) compare une valeur de tension résultant du signal de mesure de test avec une valeur de consigne de tension dépendant du signal de test (TS).

4. Dispositif selon la revendication 3, **caractérisé en ce que** l'unité électronique (7), dans le cas où la valeur de tension résultant du signal de mesure de test diffère de la valeur de consigne de tension dépendant du signal de test (TS) au-delà d'une plage de tolérance prédéfinissable, génère un message d'erreur.

5. Dispositif selon la revendication 1, **caractérisé en ce que** le signal de test (TS) est conçu de telle sorte qu'une valeur de tension pour l'essentiel constante est présente sur l'unité de sonde (5) au moins pendant une période de test prédéfinissable.

6. Dispositif selon la revendication 1, **caractérisé en ce qu'**est prévu dans l'unité électronique (7) au moins un microprocesseur (8).
